# EUROPEAN PATENT APPLICATION

(11) **EP 2 169 259 A1**
(43) Date of publication of application: **31.03.2010**
(21) Application number: 08388032.8
(22) Date of filing: 26.09.2008
(51) Int. Cl.: F16G 11/00, B60P 7/08

(54) **Suspension and mounting bracket for suspension and securing strap, designed for suspension and mounting of various items**

(71) Applicant: Lenander, Søren, 1368 Copenhagen (DK)
(72) Inventor: Lenander, Søren, 1368 Copenhagen (DK)

(57) **Abstract**

The bracket consists of a plate in, on or under which you can fasten/mount a strap (2), string, band or wire preferably One-Wrap® (VELCRO® Brand) in different widths, thicknesses and lengths. The bracket/suspension is then ready to fasten, suspend and/or fix various items of different material (3), shape and quality.

## Description

The invention is related to a bracket/suspension for attaching and securing of strap and straps, in which and on which you can suspend, attach, strap and fix various items of different material and quality.
The bracket/suspension is consisting of a plate, made of plastic, metal or other suitable material with one or several holes for mounting the bracket, e.g. with screw/screws to wall, floor or free-standing, driving/running, sailing or floating elements, but the bracket can also be designed, so it can be mounted in other ways, e.g. by mounting in rail/rails or by mounting the bracket with magnet and buttons or by gluing, nailing, button, hammer or turning the bracket on.
In the bracket there is provided place for a securing strap, string, band, thread, metal strip or wire, a strap/string, cord, metal strip or wire which attaches, sticks or ties, binds, button, wraps or somehow joins/connects with each other and in this way holds, fastens and suspends various items of different quality, shapes and materials. The design, in this example, appeals to straps with hook and loop (e.g. VELCRO^{®} Brand), but can also be used for straps, strings, bands, wire of plastic, fabric, metal or wood or other suitable material. The bracket is designed to mount, suspend and/or fix various items of different material, shape and quality.

For well-known suspensions of this kind the strap/string hangs fastened with a screw and not in a bracket, which reduces the possibilities for varied suspension and mounting. The well-known suspension is available in the Velcro selection and is limit to Velcro straps, fastened with screws, mainly for suspension of garden tools, which means that the garden tool is hanging without being fixed towards the article it is hanging in. In addition to that there are several know limitations as to what can be hang in the suspension and therefore also where the suspension can be used appropriately. The well-known suspension is furthermore more bulky as the suspended article is hanging movable, a mobility that can be an inconvenience in itself. Also the durability and the strength may be less, as there will be less strength in the retaining point.

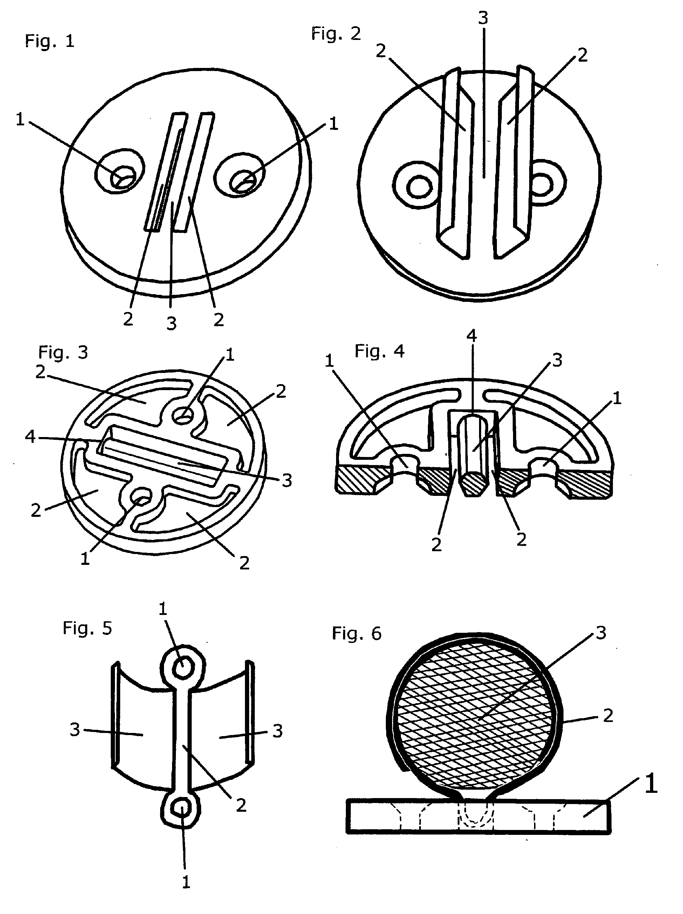

The bracket has, as shown in the example of figure 1, a bar between two grooves in the bracket (figures 1 - 3). The bar is during the process of casting the whole bracket, casted or formed in one piece, of the same material as the bracket is casted or formed in, but can also be formed so that the bar is loose and inserted at the same time, before or after the strap (band/string) fixed in the bracket is inserted. The bar can be made of plastic, wood, metal, glass fibre, concrete or other suitable material and the thickness can be from 0.01mm up to 50mm, the width from 0.01mm up to 500mm, the length from 0.2mm up to 500mm, depending on e.g. the material it is made of and the need for what should be suspended, supported and/or balanced in the bracket.
The bracket can be made in a more simple form as shown in figure 5, consisting of only centre bar preferably (figure 5 - 2), in this case mounted with screws, one screw in each end in the holes in the bracket/bar.
In the version, figure 5, the bracket can measure from 5mm up to 500mm in length, measure from 5mm up to 500mm in width and measure from 0-2mm to 50mm in thickness.

As shown in Figure 1, there are two parallel grooves in the bracket (figure 1- 2). Each of these grooves may vary in width and length, depending on the thickness and width in itself attaching, binding or sticking band, strap, string or wire which should be led through the grooves. The width of the grooves may vary from 0.1mm to 20mm and the length of the grooves may vary from 2mm to 500mm according to the width and thickness in itself attaching, sticking, binding, buttoning, wrapping or somehow joined/connected with each other band/straps, strings, metal strip or wire which should be fastened/secured in the bracket. The bracket can be made with several grooves in each bracket, with several bars accordingly, which makes it possible to fasten several in itself attaching, binding or sticking straps, string or wires, which again means that you can suspend and secure or fasten several various items of different material and quality in the same bracket and stick together several different items of different material and quality to each other and this does not mean that they can only be mounted to wall, floor or free-standing, driving/running, sailing or floating elements, but that they can also be fixed to and/or on each other.

The bracket can be of several shapes. In figure 1 the bracket is round, but can also be oval, round, square, rectangular or edged in a countless number of edges and a round bracket can in diameter measure from 5mm to 600mm, furthermore the area of the bracket can be everything from 1 cm² to 2500 cm². The bracket can be shaped as figures, faces or e.g. as an elephant or an elephant head, where the Velcro or the strap, string, band, metal strip or wire, which attaches, sticks, binds, buttons, wraps or somehow joints/connects with each other and in this way holds the article, forms the trunk of the elephant.

The thickness/height of the bracket may vary according to the strength of the material the bracket is casted, formed or made of, according to the choice of the thickness of it in itself attaching, sticking or binding strap, string, band or wire, which should be secured in the bracket and according to the shape and weight of the items you wish to suspend, secure or balance in the bracket.
The thickness of the bracket may vary from 0.2mm to 55mm.
Preferably the bracket measures 41mm in diameter, preferably 5mm in thickness, the length of the bar measures preferably 25mm, the thickness of the bar measures preferably 3mm, the width of the bar measures preferably 4mm, the two parallel holes on each side of the bar, the entry holes, both measure preferably 25mm in the length and preferably 1.1mm in the width. The screw holes, preferably two holes, measure preferably 3mm, with a distance between them of preferably 20mm. The holes in the bracket are preferably countersunk.

The bracket can be adjusted and suspended, mounted, nailed, buttoned, glued, turned or attached horizontally and/or vertically - or as required adjusted to the article which should be suspended, attached, fixed, sticked or buttoned and adjusted to the material and shape of the element the article should be suspended on.
Screws, screw holes and the size of the screw holes, distance and placing are individual according to how heavy items or which kind of article you wish to suspend, secure or balance in the bracket and which kind and sizes of rails, glue, nails, magnets, buttons and fastening method you should use again depends on weight and shape of the items you wish to suspend, fasten or balance in the bracket.
- **Figure 1:**: In figure 1 the bracket is shown in one of the designs. In this case with two holes for suspension with screw or nail (Fig. 1 - 1). Through the bracket goes two parallel holes (Fig. 1 - 2) forming a bar in the middle (Fig. 1 - 3). In this case, the Velcro One-Wrap® should be led through the two parallel holes through, so the Velcro can be fastened in the bracket around the bar in the middle.
- **Figure 2:**: In Fig. 2 the bracket is shown with Velcro (Fig. 2 - 2) led through the two parallel holes (the holes are not visible in Fig. 2, as they are covered by Velcro). The two parallel holes forms the bar in the middle (Fig. 2 - 3), the Velcro (Fig. 2 - 2) is here attached in the bracket by being led through behind and around the bar.
- **Figure 3**: In Fig. 3 the bracket is drawn from behind with the two holes for screws (Fig. 3 - 1). In Fig. 3 it is shown that behind the bracket, hollowing can be made when it is casted (Fig. 3 - 2) in order to reduce the consumption of the material. In Fig. 3 the bar is shown (Fig. 3 - 3), which is countersunk (Fig. 3 - 4) in order to provide place for Velcro or other straps or strips in the bracket, so the bracket after suspension can fit tight to whatever the bracket is attached, glued, sticked or in any other way mounted on or to.
- **Figure 4**: In Fig. 4 a cross section of the bracket is shown of the bracket with two countersunk screw holes.
(Fig. 4 - 1). On each side of the bar (Fig. 4 - 3) the two oblong parallel holes are shown (Fig. 4 - 2), which together creates the bar in the middle (Fig. 4 - 3). In Fig. 4 the countersinking to the Velcro is here clearly.
- **Figure 5**: In Fig. 5 one of many alternative designs of the bracket is shown, where the bar is formed with screw/nail hole in each end (Fig. 5 - 1), so the bar and the holes constitutes the bracket (Fig. 5 - 2). In Fig. 5 it is shown, how the bracket looks and how the Velcro (Fig. 5 - 3) is led behind or through the bracket and the bar (Fig. 5 - 2).
- **Figure 6**: In Fig. 6 an article is shown (Fig. 6 - 3), which is secured and fastened by aid of Velcro (Fig. 6 - 2), and the Velcro is attached in the bracket (Fig. 6 - 1).

## Claims

1. Suspension and mounting bracket, preferably plastic for securing and fixing of preferably strap with hook and loop, with hook on one side and loop on the other side of the same strap - also called "One-Wrap^{®}" of VELCRO^{®} Brand - in and on which you can suspend, attach, fasten and fix various items of different material and quality. In this case attached with screws.
The bracket can be of various shapes such as square, rectangular, oval or round and all other known shapes, but preferably round and measures preferably 41mm in diameter and 5mm in thickness. The length of the bar measures preferably 25mm, the thickness of the bar measures preferably 3mm and the width of the bar measures preferably 4mm. The two parallel holes on each side of the bar, the entry holes, both measure preferably 25mm in the length and preferably 1.1mm in the width. The screw holes preferably two holes measure preferably 3mm, with a distance between them of preferably 20mm, the holes in the bracket are preferably countersunk.

2. According to claim number 1 the bracket can be manufactured of die-casted polymer materials such as ABS, Nylon, polyethelene, glass fibre and carbon fibre.

3. According to claims number 1 and 2 the bracket can be manufactured of and casted in several different metals such as iron, steel, lead, aluminium and can furthermore be manufactured of laminated wood, plywood, wood or other suitable materials.

4. According to claims number 1, 2 and 3 it is possible to mount the bracket with other kinds of straps and strings additional to "One-Wrap^{®}" of VELCRO^{®} Brand, if they only can attach, stick, tie, button, wrap or somehow joint/connect with each other.

5. According to claims 1, 2, 3 and 4 the bracket can be manufactured, so place is provided for several straps;
Preferably straps with hook and loop, so several different items can be attached, fastened or fixed in the same bracket or only attached to or on each other.

6. According to claims 1, 2, 3, 4 and 5 the bar in the bracket can be manufactured in varied sizes, a thickness from 0.0 1 mm up to 50mm, a width from 0.0 1 mm up to 500mm, a length from 0.2mm to 500mm.

7. According to claims 1, 2, 3, 4, 5 and 5 the bracket can be manufactured in several shapes, as square, rectangular, oval, round or edged in a countless number of edges and be everything between 1 cm² to 2500 cm².

8. According to claims 1, 2, 3, 4, 5, 6 and 7 the bracket can be manufactured so simple so the bracket only consist of bar or bars, see figure 5, where the bracket is mounted in the ends and/or for instance in the centre of the bar.

9. According to claims 1, 2, 3, 4, 5, 6, 7 and 8 the bracket can be manufactured in varied thicknesses from 0.2mm to 50mm.

10. According to claims 1, 2, 3, 4, 5, 6, 7, 8 and 9 the bracket has preferably two parallel holes/grooves, one on each side of the bar. The space between the two parallel holes/grooves constitutes the bar. The holes - also called entry holes - may vary in the width from 0.1mm to 20mm and vary in the length 1mm to 500mm.
